# EUROPEAN PATENT APPLICATION

(11) **EP 0 855 840 A1**
(43) Date of publication of application: **29.07.1998**
(21) Application number: 98101465.7
(22) Date of filing: 28.01.1998
(51) Int. Cl.: H04N 7/54, H04N 7/60, H04N 7/62

(54) **Digital video signal MPEG2 and time division multiplexer and multiplexed digital signal demultiplexer**

(30) Priority: 28.01.1997 JP 13852/97
(71) Applicant: NEC CORPORATION, Tokyo (JP)
(72) Inventor: Domon, Wataru, Minato-ku, Tokyo (JP)
(74) Representative: VOSSIUS & PARTNER

(57) **Abstract**

In a digital signal multiplexing device of a digital signal multiplexing and demultiplexing system, two multiplexers (21) respectively multiplex first and second programs of first to N-th MPEG2 compression encoded digital video signals into first and second transport signal sequences in accordance with an MPEG2 transport signal scheme, where N represents an integer which is two or greater. In accordance with a time division multiplexing scheme other than the MPEG2 transport stream scheme, a single multiplexer (23) further multiplexes the first and the second sequences into a multiplexed digital signal comprising a succession of payloads in which the first to the N-th digital video signals are time division multiplexed. The system is useful in a wholly digital broadcast service for more than a score of satellite broadcast channels.

## Description

This invention relates to a digital signal multiplexing device for multiplexing a plurality of digital video signals compression encoded in accordance with an MPEG2 (Moving Picture Experts Group - Phase 2) scheme into a multiplexed digital signal in accordance with an MPEG2-TS (MPEG2-Transport Stream) scheme and to a multiplexed digital signal demultiplexing device for demultiplexing the multiplexed digital signal into reproductions of the digital video signals and, more specifically, to a demultiplexing device which is of the type described and is capable of selecting a desired digital video signal from the reproductions. The digital video signal may include a plurality of video and audio signals of various media. The multiplexing and the demultiplexing devices are useful in communication and broadcasting networks.

Recently, attention is directed to a communication or a broadcasting network to which a moving picture compression technique is applied with a view to transmitting or propagating video signals of a plurality of channels. Inasmuch as it is possible to reduce a bandwidth of the video signals to one fifth and even to one several hundredth, it becomes possible with the moving picture compression technique to accommodate a multiplicity or video signals in a limited bandwidth of transmitting or propagating devices and of propagating channels.

The MPEG2 scheme is typically used in implementing the moving picture compression technique and is standardized by ISO/IEC (International Organisation for Standardisation/International Electrotechnical Commission) as an MPEG2 Standard ISO/ICE 13818 for video compression, audio compression, and multimedia multiplexing.

The MPEG2 Standard additionally specifies schemes or scheduled for multiplexing the compressed video and audio signals as an MPEG2 Program Stream and an MPEG2-TS which is called the MPEG2-TS scheme heretobefore. The MPEG2 Program Stream is a scheme of multiplexing video and audio streams into which separately compressed are video and audio signals of only one video program. In contrast, the MPEG2-TS scheme specifies a standard for multiplexing video and audio streams of a plurality of video programs.

According to the MPEG2-TS scheme, each compressed video and audio signals is divided into transport packets having a common packet length of one hundred and eighty-eight (188) bytes. Each transport packet includes a packet identification (PID) field or value, thirteen bits wide, for use in distinguishing a kind of such transport packets from another kind of transport packets. Additionally, the transport packets include, besides the video and the audio signals, progran specific information (PSI) data which include a program map table (PMT) descriptive of the packet identification values of the transport packets for the video and the audio signals of respective video programs and a program association table (PAT) descriptive or the packet identification values corresponding in the program map table to the video programs included in a transport packet stream and based on which a desired broadcast program or schedule is selected.

Using the MPEG2-TS scheme in multiplexing a plurality of broadcast services or schedules, various video signal transmitting systems are in development at present as regards broadcasting networks in which either a communication or broadcast satellite is or coaxial cables are used. Above all, communication satellite broadcast systems are already in practical use. In such a system, digital baseband signals of from several scores to several hundreds of broadcast schedules are multiplexed in accordance with the MPEG2-TS scheme and are used in modulating a plurality of carrier signals.

For example, a JCSAT-3 communication satellite of Japan is used in digital communication satellite broadcast systems. In each of these systems, fifteen or so carrier signals of an information propagating rate of about 30 Mbps are modulated by from four to six broadcast schedules multiplexed in accordance with the MPEG2-TS scheme. As regards the techniques used in these satellite broadcast systems, details are described as an ARIB Standard in a desirable specification published by the Association of Radio Industries and Businesses (ARIB) under the date of May 1996 and the title of "Digital Receiver for Digital Satellite Broadcasting Services Using Communication Satellites".

On the other hand, realization of a wide band optical access system is urgently required, which can flexibly accommodate various services including the communication and the broadcast services. For a compatibility with the communication service for which digitization is in progress, it is necessary that a broadcast service for the optical access system should also be digitized. In contrast to the fact that digital video signals are modulated into analog carrier signals for transmission in the communication satellite or the coaxial cable broadcast services, the digital video signals of a plurality of channels should be propagated in the optical access system as the digital baseband signals as they are.

Incidentally, three prior documents will later be referred to as follows. (1) A paper contributed by M. Shibutani and five others including W. Domon, the present inventor, to the 1996 General Meeting of the Telecommunication Society of the Institute of Electronics, Information, and Communication Engineers of Japan, as Paper No. SB-7-1, under the title of "GTTH (Gigabit to the Home) - 'GTTH'; an Ultra Wideband Optical Access System for Future Multimedia Communication Systems" as translated by the contributors. (2) A paper contributed by Kenji Okada and three others to the 1993 Spring General Meeting of the Institute of Electronics, Information, and Communication Engineers of Japan, as Paper No. SB-9-2, under the title of "Passive Double Star Type Fiber Optic Subscriber Systems" as translated by the contributors. (3) A paper contributed by Tsutomu Noda and twelve others tO the Technical Report, Volume 20, No, 25, of the institute of Television Engineers of Japan, under the title of "64QAM Transmission Experiment of Digital CATV by Tentative Specifications of Telecommunication Technology Council of MPT Cable Television Conference Working Group Reports - 1" together with a very short abstract in English.

In conventional digital signal multiplexing device and multiplexed digital signal demultiplexing device described above, used is the MPEG2-TS scheme. Inasmuch as thirteen bits are allocated to each packet identification datum, it is theoretically possible with the MPEG2-TS scheme to multiplex more than a thousand broadcast schedules.

It is, however, necessary in practice to give a higher signal rate to the carrier signals. This results in a restriction imposed, by operation speeds of signal multiplexing and demultiplexing circuits, on the number of broadcast schedules which can be multiplexed with the MPEG2-TS scheme. This restriction is more severe for the signal demultiplexing circuits. For example, the restriction is at 60 Mbps for the signal rate and at about ten for the number of broadcast schedules.

A task therefore results in the optical access system such that the MPEG2-TS scheme alone hardly makes it possible to provide an optical access system for the broadcast service of scores of schedules or programs. Another task results in the optical access system of the satellite broadcast system accommodating the digital video signals multiplexed in the MPEG2-TS scheme, even if the restriction is lightened in future, such that contents of the transport packets must be changed. This is because the video signals of the schedules are multiplexed in the MPEG2-TS scheme for each carrier signal in the digital satellite broadcast service with a result that a common packet identification value might he used in a plurality of carrier signals. As a consequence, it becomes necessary to avoid use of a single packet identification value in a plurality of packet stream signals. More particularly, it becomes indispensable to rewrite the packet identification values and to change descriptions in the packet map table and the program association table in accordance with rewriting of the packet identification values.

It is consequently an object of the present invention to provide a digital signal multiplexing device which makes use of transport stream signals of an MPEG2 Transport Stream scheme and is capable of implementing a wholly digital broadcast service of more than scores of channels with no necessity of changing contents of transport packets used in the transport stream signals.

It is another object of this invention to provide a multiplexed digital signal demultiplexing device for demultiplexing a multiplexed digital signal transmitted thereto from a digital signal multiplexing device of the type described.

Other objects of this invention will become clear as the description proceeds.

In accordance with an aspect of this invention, there is provided a digital signal multiplexing device which is for multiplexing into a multiplexed digital signal a first plurality of digital video signals compression encoded in accordance with an MPEG2 (Moving Picture Experts Group - Phase 2) scheme and which comprises (a) first multiplexing means for multiplexing the digital video signals in accordance with an MPEG2 transport stream scheme into a second plurality of transport stream signals and (b) second multiplexing means for multiplexing the transport stream signals into the multiplexed digital signal in accordance with a time division multiplexing scheme from which the MPEG2 transport stream scheme is excluded.

In accordance with a different aspect of this invention, there is provided a multiplexed digital signal demultiplexing device which is for demultiplexing a multiplexing digital signal produced by compression encoding a first plurality of digital video signals in accordance with an MPEG2 scheme respectively into encoded sequences, converting the encoded sequences respectively to packet sequences, each packet sequence being a sequence of packets and including a packet header indicative of a packet stream identifier for use in distinguishing this each sequence of packets from another sequence of packets, multiplexing the packet sequences into a second plurality of transport stream signals in accordance with an MPEG2 transport stream scheme, and tins division multiplexing the transport stream signals into the multiplexed digital signal and which comprises (a) time division demultiplexing means for demultiplexing the multiplexed digital signals into the second plurality of reproductions of the transport stream signals with reference to the packet stream identifier included in each reproduction and MPEG2 demultiplexing means for demultiplexing the reproductions of transform stream signals in accordance with the MPEG2 transport stream scheme into the first plurality of reproductions of the digital video signals.
Fig. 1 shows in blocks the principles of structure of a digital signal multiplexing device according to the instant invention;
Fig. 2 is a block diagram of a digital signal multiplexing and demultiplexing system according to a first embodiment of this invention;
Fig. 3 schematically shows a packet format for use in the digital signal multiplexing and demultiplexing system illustrated in Fig. 2;
Figs. 4 and 5 are block diagrams of digital signal multiplexing and demultiplexing systems according to second and third embodiments of this invention, respectively;
Fig. 6 is a detailed block diagram of a digital signal multiplexing device illustrated in Fig. 5;
Fig. 7 schematically shows a frame format for use in the digital signal multiplexing and demultiplexing system depicted in Fig. 5;
Fig. 8 is a detailed block diagram of a multiplexed digital signal demultiplexing device depicted in Fig. 5;
Fig. 9 is a block diagram of a digital signal multiplexing device of a modification of the digital signal multiplexing and demultiplexing system illustrated in Fig. 5;
Fig. 10 is a block diagram of a multiplexed digital signal demultiplexing device of the modification mentioned in conjunction with Fig. 9;
Fig. 11 schematically shows a frame format for use in the modification depicted in Figs. 9 and 10;
Fig. 12 is a block diagram of a digital signal multiplexing device of a different modification of the system illustrated in Fig. 5;
Fig. 13 is a block diagram of a multiplexed digital signal demodulating device of the different modification mentioned in connection with Fig. 12;
Fig. 14 schematically shows a frame format for use in the different modification mentioned in conjunction with Figs. 12 and 13;
Fig. 15 is a block diagram of a digital signal multiplexing and demultiplexing system according to a fourth embodiment of this invention;
Fig. 16 schematically shows a frame format for use in the system depicted in Fig. 15; and
Figs. 17 to 19 are block diagrams of digital signal multiplexing devices for use in systems according to fifth to seventh embodiments of this invention, respectively.

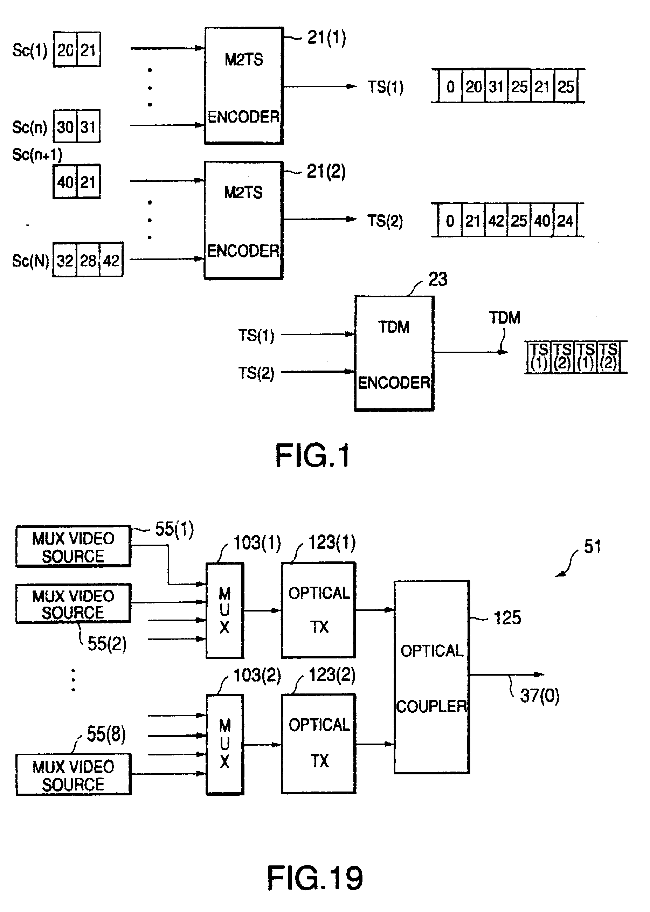

Referring to Fig. 1, the principles will first be described as regards a digital signal multiplexing and demultiplexing system according to the present invention. In a digital signal multiplexing device of the system, a first plurality of digital video signals are multiplexed into a multiplexed digital signal for propagation to a plurality of multiplexed digital signal demultiplexing devices of the system. It will be assumed that the digital video signals are signals of broadcast programs, the first plurality in number. Each program will herein be referred to alternatively as a schedule or channel. Each digital video signal includes either a digital audio signal or a data signal or both.

In the example being illustrated, the digital video signals consist of first to N-th schedules Sc(1) to Sc(N), where N represents the first plurality. The first to the N-th schedules are grouped into first and second schedule groups consisting respectively of the first to an n-th schedules and an (n+1)-th to the N-th schedules, where n represents a natural number between 1 and N, both exclusive. Without loss of generality, the first schedule video signal consists of a first digital video signal and a first digital audio signal. The n-th schedule video signal consists of an n-th digital video signal and an n-th data signal. The (n+1)-th schedule video signal consists of an (n+1)-th digital video signal and an (n+1)-th data signal. The N-th schedule video signal consists of an N-th digital video signal, an N-th digital audio signal, and an N-th data signal. For use in the digital signal multiplexing device, each of the first to the N-th schedule video signals of each schedule group is compression encoded in accordance with an MPEG2 (Moving Picture Express Group - Phase 2) scheme as will presently be described.

In correspondence to the first and the second schedule groups, first and second MPEG2-TS (transport stream) encoders 21(1) and 21(2) are used in the digital signal multiplexing device in multiplexing the first to the n-th and the (n+1)-th to the N-th schedule video signals respectively into first and second transport stream signals TS(1) and TS(2) in accordance with an MPEG2-TS scheme. Such MPEG2-TS encoders will be either individually or collectively designated by a simple reference numeral 21. Similar reference numerals and letters will be used throughout the description. In general, the transport stream signals TS are a second plurality in total, where the second plurality is less than the first plurality. Merely for brevity of the description and simplicity of illustration, system units operable in the MPEG2-TS scheme will herein be referred to as through operable in an M2 or M2TS scheme. Each MPEG2-TS encoder 21 is accordingly labelled "M2TS ENCODER" in Fig. 1. It is possible to understand in Fig. 1 that each M2TS encoder 21 compression encodes the digital video signals into the encoded and then multiplexed into the transport stream signal. It is additionally possible to use an MPEG1 scheme in compression encoding.

The first or the second M2TS encoder 21 converts each compression encoded video signal to a sequence of transport packets having a common packet length of 188 bytes. Thereafter, each M2TS encoder 21 multiplexes such sequences of transport packets into the transport stream signal TS. Incidentally, each data signal may be directly converted to the transport packets without a process of compression encoding.

The transport packets comprise video packets, audio packets, data packets, and other various packets. The video, the audio, and the data packets are given the packet identification (PID) values which are described heretobefore and will be called PID's. It is possible, inasmuch as signals of each schedule group are independently multiplexed in the M2TS scheme, to use a common PID in the first and the second transport stream signals TS(1) and TS(2). As exemplified in Fig. 1, PID's of 20, 30, 40, and 32 are given to the video packets which result from the first, the n-th, the (n+1)-th, and the N-th schedule video signals. A common PID of 21 is given to the audio and the data packets resulting from the first schedule audio signal and the (n+1)-th schedule data signal. PID's of 28, 31, and 42 are given respectively to the audio packet resulting from the N-th schedule audio signal and the data packets resulting from the n-th and the N-th schedule data signals. In Fig. 1, such PID's are depicted in small rectangles.

The various packets are for the program specific information PSI and comprise packets descriptive of the PAT (program association table) and the PMT (program map table). In the transport stream signals, each PAT packet is given a PID of 0. Other PID values, such as 24 and 25 are given to PMT packets. In Fig. 1, the transport stream signals TS are depicted as sequences of such PID's. In the first transport stream TS(1), the PAT packet indicates the first to the n-th schedules. The PMT packets of the PID 25 indicate that the PID's 20 and 21 are the video and the audio packets or the first schedule. In the second transport stream signal TS(2), the PAT packet indicates the (n+1)-th to the N-th schedules. The PMT packet of the PID 25 indicates the PID's 40 and 21 of the (n+1)-th schedule. The PMT packet of the PID 24 is for the PMT for the N-th schedule, such as the PID 42 of the N-th schedule data signal.

Prom the M2TS encoders 21, the transport stream signals TS are delivered to a time division (TDM) encoder 23 and are multiplexed into the multiplexed digital signal in accordance with a time division multiplexing scheme from which the M2TS scheme is excluded. The multiplexed digital signal is indicated by TDM and is in the illustrated example a time sequential sequence in which the first and the second transport stream signals are alternatingly present. It is possible with this digital signal multiplexing device to multiplex into the multiplexed digital signal the second plurality of transport stream signals into which the first plurality of compression encoded video signals are multiplexed in the M2TS scheme. This enables with a simple structure to produce the multiplexed digital signal for a video propagation system of a great propagation capacity.

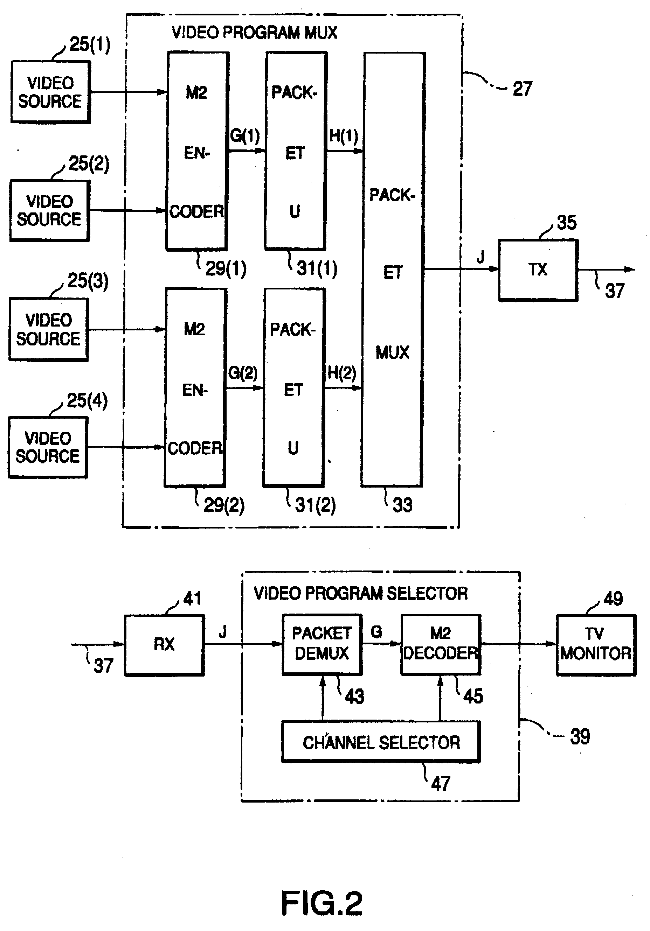

Referring to Fig. 2, the description will proceed to a digital signal multiplexing and demultiplexing system according to a first preferred embodiment of this invention. It should be noted throughout the drawing figures that similar parts are designated by like reference numerals.

In this system, the digital signal multiplexing device multiplexes four broadcast schedules At each multiplexed digital signal demultiplexing device, a subscriber selects a desired one of the broadcast schedules for reception. The system is therefore a multichannel video signal propagation system and is for first to fourth video sources 25(1), 25(2), 25(3), and 24(4) or 25 for first to fourth input video signals, each of which is whichever of a digital and an analog video signal and includes a digital or analog audio signal.

The digital signal multiplexing device is indicated at 27 as a video program multiplexer (MUX) and comprises first and second MPEG2 or M2 encoders 29(1) and 29(2) or 29. The first M2 encoder 29(1) compression encodes the first and the second input video signals in accordance with the MPEG2 scheme respectively into first and second digital video signals and multiplexes the first and the second digital video signals in accordance with the MPEG2-TS scheme into a first intermediate multiplexed signal G(1). Similarly, the second M2 encoder 29(2) produces a second intermediate multiplexed signal G(2). The first and the second M2 encoders 29 have their respective compression ratios and produce the first and the second intermediate multiplexed signals G respectively at first and second bit rates of 6 Mbps and 12 Mbps. Moreover, the first M2 encoder 29(1) assigns the first and the second input video signals in the PMT respectively with the PID's of 19 and 1C in the hexadecimal notation. The second M2 encoder 29(2) assigns also the PID's of 19 and 1C to the third and the fourth input video signals, respectively.

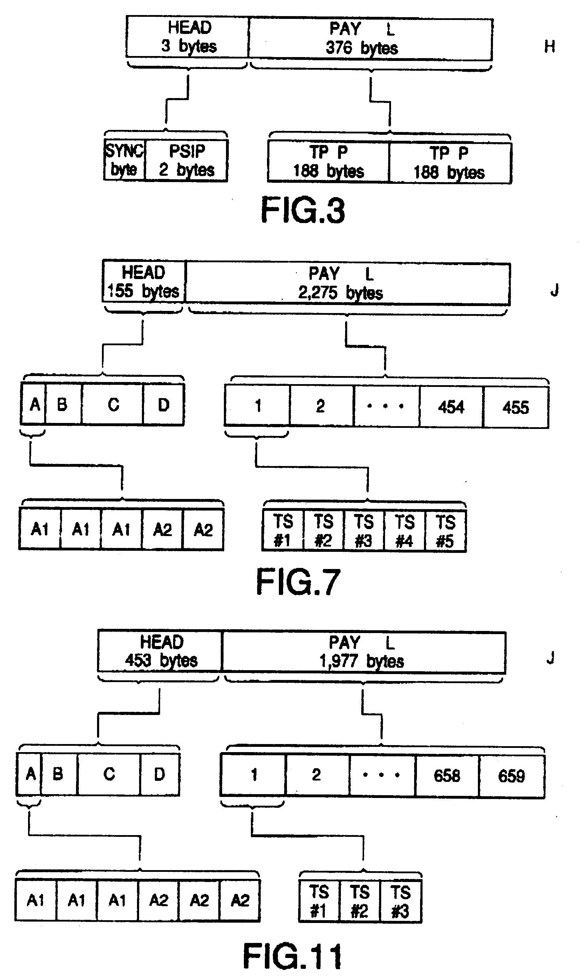

In addition to Fig. 2, Fig. 3 will be referred to during a short while. Connected respectively to the first and the second M2 encoders 29 are first and second packet forming units (PACKET U) 31(1) and 31(2) or 31 for converting the first and the second intermediate multiplexed signals G to first and second sequences of composite packets or first and second packet sequences H(1) and H(2) or H. The composite packets have a common packet length of 379 bytes. Each composite packet is illustrated in Fig. 3 along an upper row at H and consists of a 3-byte packet header (HEAD) and a 376-byte payload (PAY L) which in turn consists of two transport packets (TP P) for the first or the third and the second or the fourth digital video signals MPEG2 multiplexed in the first or the second intermediate multiplexed signal. The header consists of a synchronization byte and a two-byte field which is for a packet stream identifier PSID individually indicative of the first and the second intermediate multiplexed signal. In the example being illustrated, this PID is given numerical valued of 53 and 96 in the hexadecimal notation for the first and the second packet sequences. Each packet sequence is the transport stream signal.

Turning back to Fig. 2, each packet forming unit 31 raises a bit rate by about 0.8%. The first and the second packet sequences H therefore have slightly raised bit rates of 6.048 Mbps and 12.096 Mbps and are further multiplexed by a packet sequence multiplexer (PACKET MUX) 33 into a multiplexed digital signal J in which the packets of the first and the second packet sequences are packet multiplexed in a number ratio of one to two. A transport packet transmitter 35 converts the multiplexed digital signal into a bipolar signal and propagates the bipolar signal to a propagation channel 37 as a propagated signal. Incidentally, the multiplexed digital signal is unipolar.

Reviewing Figs. 1 and 2, it is possible to understand that each first M2TS encoder 21 comprises the first and the second M2 encoders 29 as a plurality of input encoders, equal in number to the first plurality, for respectively compression encoding the input video sequences in accordance with the MPEG2 scheme into encoded sequences. The packet forming units 31 are connected to such input encoders 29 and respectively convert the encoded sequences to packet sequences, equal in number to the first plurality. The packet sequences include a packet header indicative of a packet stream identifier PSID (Fig. 3), such as by a hexadecimal value of 53 or 96, for use in distinguishing each packet sequence from another packet sequence which may be produced in a different MPEG2 encoder (not shown). The packet sequence multiplexer 33 serves as the time division encoder 23 for multiplexing the packet sequences into a transport stream signal which corresponds to the time division multiplexed signal. It is additionally possible to understand that the transport stream transmitter 35 partly serves as the time division encoder 23 for multiplexing the transport stream signal or signals into the multiplexed digital signal which is called either the bipolar or the propagated signal.

In Fig. 2, only one of the multiplexed digital signal demultiplexing devices is indicated at 39 as a video prograin selector. Connected to the propagation channel 37, a propagated signal receiver 41 receives the propagated signal to reproduce the multiplexed digital signal J for delivery to the multiplexed digital signal demultiplexing device 39. In the example being illustrated, the multiplexed digital signal demultiplexing device 39 comprises a packet demultiplexer 43 and an M2 decoder 45 which are successively connected to the receiver 41 and collectively serve a broadcast schedule selector controlled by a reception channel selector 47 and connected to a television (TV) monitor 49. A selector table of the packet stream identifiers PSID and the packet identifiers PID's of the PMT are stored in the channel selector 47 for the broadcast schedules to control respectively the packet demultiplexer 43 and the M2 decoder 45. In the illustrated example, the selection table is exemplified in Table 1 in the following.

**Table 1**

| Schedule | PSID | PID |
|---|---|---|
| 1 | 53 | 19 |
| 2 | 53 | 1C |
| 3 | 96 | 19 |
| 4 | 96 | 1C |

The multiplexed digital signal demultiplexing device 39 is operable as follows. When the subscriber selects, for example, the third channel or schedule as the desired schedule, the channel selector 47 controls the packet demultiplexer 43 and the M2 encoder 45 to select the second transport stream signal and the third broadcast schedule. The packet demultiplexer 43 demultiplexes the multiplexed digital signal into reproductions of the first and the second transport packet sequences and selects in response to the packet stream identifier of the hexadecimal value of 96 the second packet sequence as a selected packet sequence G. Responsive to the PID of the hexadecimal value 19 in the PMT, the M2 decoder 45 decodes the transport packets to deliver a reproduction of the third input digital signal as a composite analog signal of, for example, the NTSC (National Television System Committee). The television monitor 49 displays picture scenes of a video signal and a reproduced audio signal of the composite analog signal. It has been confirmed that such picture scenes and reproduced audio signal have no perceivable deterioration in comparison with outputs of the third video source 25(3). In addition, it has been confirmed that the input video signal is propagated into the composite analog signal is substantial realtime with a delay of only about 10 milliseconds despite the compression encoding, conversion into the transport stream signal and into the multiplexed digital signal, reproduction, and decoding.

In the manner described in connection with the digital signal multiplexing device 27, it is likewise possible to understand that the multiplexed digital signal demultiplexing device 39 is for demultiplexing the multiplexed digital signal which is produced by compression encoding a first plurality of digital video signals in accordance with an MPEG2 scheme into encoded sequences, and converting the encoded sequences respectively to packet sequences. Each packet sequence is a sequence of packets and includes a packet header indicative of a packet stream identifier for use in distinguishing this each sequence of packets from another sequence of packets. The multiplexed digital signal is produced by furthermore multiplexing the packet sequences into a second plurality of transport stream signals in accordance with an MPEG2 transport stream scheme and by time division multiplexing the transport stream signals into the multiplexed digital signal. The multiplexed digital signal demultiplexing device 39 comprises a time division demultiplexer 43 for demultiplexing the multiplexed digital signal into the second plurality of reproductions of the transport stream signals with reference to the packet stream identifier included in each reproduction and an MPEG2 demultiplexer 45 for demultiplexing the reproductions of transport stream signals in accordance with the MPEG2 transport stream scheme into the first plurality of reproductions of the digital video signals.

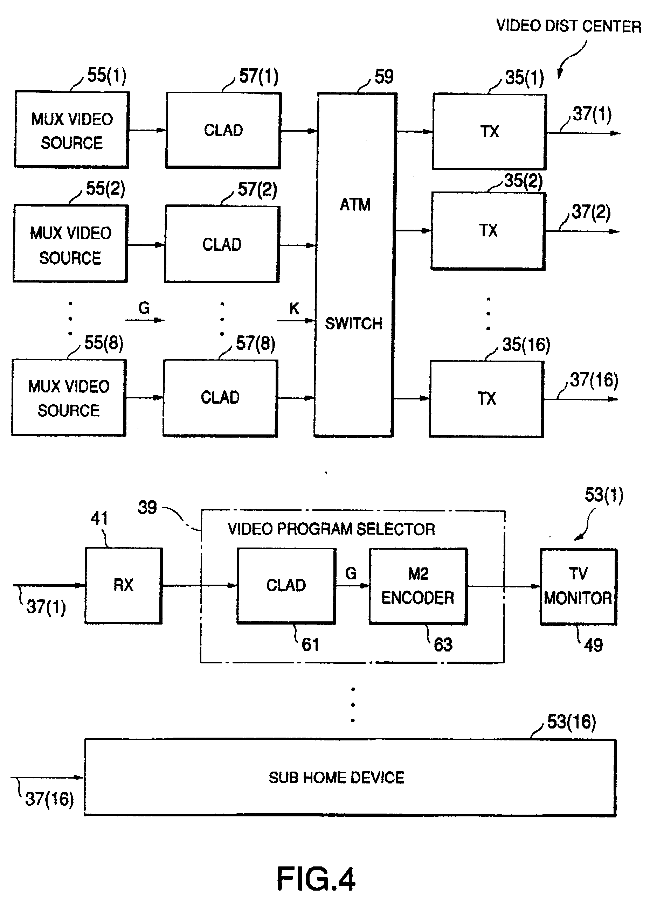

Referring now to Fig. 4, attention will be directed to a digital signal multiplexing and demultiplexing system according to a second preferred embodiment of this invention. This system is a digital video signal distributing system to which this invention is applied.

The digital video signal distributing system of this example comprises a video signal distributing (VIDEO DIST) center 51 and sixteen subscriber (SUB) home devices 53(1) to 53(16) or 53 connected together by sixteen optical fibers each of which corresponds to the propagation channel 37 of Fig. 2 and which are indicated at 37(1), 37(2), ..., and 37(16) or 37. The video signal distributing center 51 comprises first and second to eighth multiplexed (MUX) video sources 55(1), 55(2), ..., and 55(8) or 55 and includes, as will become clear in the following, the digital signal multiplexing device 27 described in conjunction with Fig. 2. The subscriber home devices 53 respectively include the multiplexed digital signal demultiplexing devices 39 described in connection with Fig. 2. At the subscriber home devices 53, each subscriber can enjoy a service of one or more of the multiplexed video sources 55 that is or are indicated by a distribution contract with a provider of the video distributing center 51. Each multiplexed video source 55 produces a multiplexed video signal into which individual video signals of about five to ten distribution schedules or programs are multiplexed in the MPEG2-TS scheme.

In the system of Fig. 4, the individual video signals of a plurality of schedules are multiplexed in accordance with the MPEG2-TS scheme and an ATM (asynchronous transfer mode) scheme which is used as the time division demultiplexing scheme other than the MPEG2-TS scheme. Distribution of the distribution schedules to subscribers is carried out by assigning different VCI's (vertical channel identifiers) respectively to the multiplexed video sources. The distribution contract for the subscribers at the subscriber home devices 53 is exemplified in Table 2 as follows In the Table 2, the VCI's are represented by hexadecimal numbers.

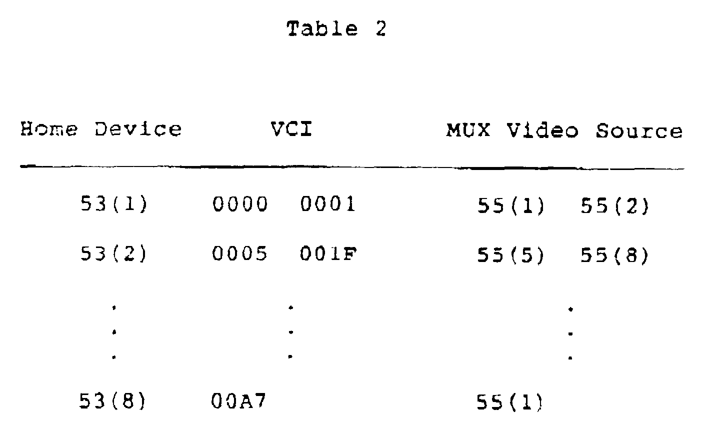

The video signal distributing center 51 comprises first and second to eighth transmitter cell assembly and disassembly units (CLAD) 57(1), 57(2), ..., and 57(8) or 57 connected respectively to the first to the eighth multiplexed video sources 55, an ATM switch 59 connected to the CLAD's 57, and first and second to sixteenth optical transmitters which are connected respectively to the first to the sixteenth optical fibers 37. Although operable a little different from the transport packet transmitter 35 of Fig. 2, each optical transmitter corresponds to the transmitter 35. The optical transmitters are therefore indicated at 35(1), 35(2), ..., and 35(16) or 35.

Produced by the multiplexed video sources 55, each multiplexed video signal is indicated by G. Such multiplexed video signals are converted to first to eighth sequences K of ATM cells of a common cell length of fifty-three bytes by the transmitter CLAD's 57 which are cell assembly units in the video signal distributing center 51. Such first to eighth ATM cell sequences K are altogether delivered to the ATM switch 59 which corresponds to the time division multiplexer 23 of Fig. 1.

Information of the VCI'S (Table 2) is stored in the ATM switch 59, which have first to sixteenth output ports. With reference to the Table 2, the ATM switch 59 rearranges the ATM cell sequences into first to sixteenth copied sequences in which copies of the ATM cells of the first to the eighth ATM cell sequences are arranged together with the VCI'S. Connected to the first to the sixteenth output ports of the ATM switch 59, the first to the sixteenth optical transmitters 35 respectively transmit to the first to the sixteenth optical fibers 37 first to sixteenth optical signals which carry the first to the sixteenth copied sequences.

The first to the sixteenth subscriber home devices 53 are similar in structure and operation. The first subscriber home device 53(1) will be described more in detail. The subscriber home device 53 comprises an optical receiver connected to the first optical fiber 37(1). The optical receiver corresponds to the propagated signal receiver 41 of Fig. 2 and is therefore designated by the reference numeral 41. Receiving the first optical signal, the optical receiver 41 reproduces the first copied sequence as a reproduced sequence in which the ATM cells respectively carry, as reproduced cells, the multiplexed video signals of the first and the second distribution schedules according to the VCI for the first subscriber home device 53(1). From the optical receiver 41, a sequence of the reproduced cells is delivered to a receiver CLAD 61, which is a cell disassembly unit and converts the reproduced cells into reproductions of the multiplexed video signals in a reproduced multiplexed video signal sequence indicated by G. Responsive to this reproduced sequence, an M2 decoder 63 reproduces the individual video signals included in the first and the second distribution schedules. Corresponding to the television monitor 49 of Fig. 2, a television monitor 49 of the subscriber home device 53 displays picture scenes and an audio signal of a channel selected by a subscriber from the first and the second broadcast programs.

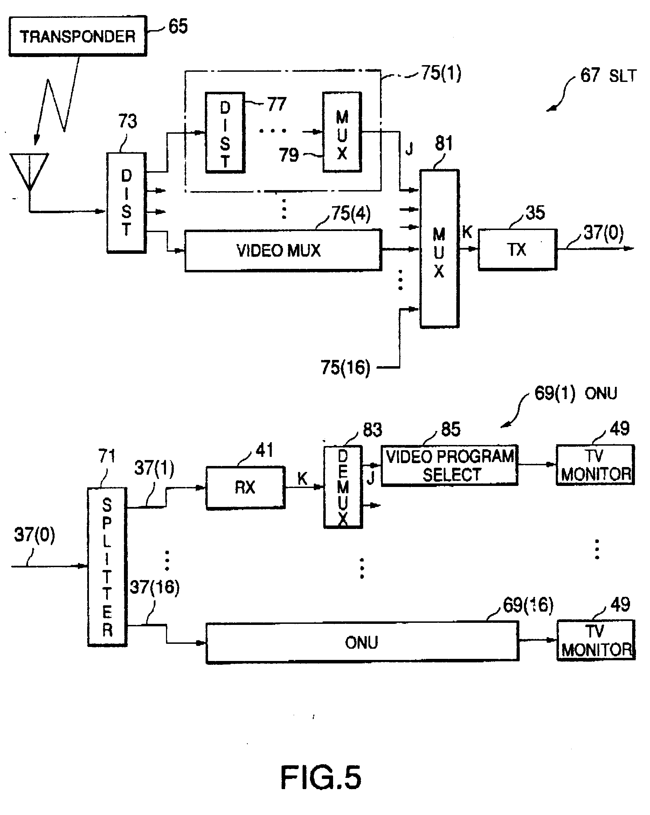

Referring to Fig. 5, a basic structure will be described in connection with a digital signal multiplexing and demultiplexing system according to a third preferred embodiment of this invention. This system is a wide band optical access system of the type described in the Shibuya et al paper cited heretobefore and is applicable flexibly to services of telecommunication and program or schedule broadcast or distribution.

The optical access system will be described only as regards the broadcast service of broadcasting downlink digital signals sent from a plurality, such as sixteen transponders 65 on board the JCSAT-3 communication satellite which is described before and is not shown. The downlink digital signals are in a bandwidth of 27 MHz in a 12-GHz band and have a common downlink bit rate of 42.192 Mbps with the QPSK (quadrature phase shift keying) modulation of respective carrier signals. The transponders 65 are about fifteen transponders carried by the communication satellite. In each downlink digital signal, information of three to five broadcast schedules are MPEG2-TS multiplexed per transponder as transport stream signals to which, for use in error correction of a radio signal, added are a convolution code of a depth of three quarters as an inner correction code and an abbreviated Reed-Solomon code as an outer correction code by adding sixteen redundancy bytes to each transport packet of 188 bytes. The downlink digital signal therefore has an information bit rate of about 29.162 Mbps.

In the optical access system being illustrated, an LST (station line terminal device) 67 corresponds to the digital signal multiplexing device 27 of Fig. 2. Each of first to sixteenth ONU's (optical network units) 69(1) to 69(16) or 69 is connected to a television monitor 49 and corresponds to the multiplexed digital signal demultiplexing device 39 of Fig. 2. The SLT 67 and the first to the sixteenth ONU's 69 are connected by a trunk optical fiber 37(0), an optical splitter (OPT SPLIT) 71, and first to sixteenth branch optical fibers 37(1) to 37(16) or 37(b). The trunk optical fiber 37(0) and the optical splitter 71 are for a high speed digital optical signal of 2488.32 Mbps into which sixteen communication channels are bit multiplexed with each communication channel given a transmission rate of 155.52 Mbps equal to a synchronous transport module (STM-1) of the synchronous digital hierarchy (SDH). THe optical access system can therefore flexibly deal with signals of different aspects, such as various frame format and various transfer protocols.

In cooperation with the optical splitter 71, a combination of the main and the branch optical fibers 37(0) and 37(b) serves as a passive double star optical subscriber system which comprises the SLT 67 and a plurality of ONU's 69 and is of the type described in the Okada et al paper cited heretobefore. The passive double star optical subscriber system is effective in reducing the scale of the SLT 67 and the cost of coupling the SLT 67 and the ONU'S 69 by the optical fibers 37(0) and 37(b) and the optical splitter 71. Incidentally, optical signals of a 1.55-micrometer wavelength band and a 1.30-micrometer wavelength band are used in a downward and an upward link, respectively, as will shortly be described more particularly.

In the example being illustrated, four channels are used by the SLT 67 among the sixteen communication channels which are described above and have the transmission rate of the STM-1 module equal to 155.52 Mbps. The SLT 67 therefore comprises a digital video signal distributor (DIST) 73 connected to a symbolically shown reception antenna for distributing the downlink digital signals to first to fourth video program multiplexing units (VIDEO MUX) 75(1) to 75(4) or 75 of sixteen video program multiplexing units. In the manner depicted in the first video program multiplexing unit 75(1) alone and as will later be illustrated more in detail, each video program multiplexing unit 75 comprises a channel distributor (DIST) 77 and a channel multiplexer (MUX) 79. The digital video signal distributor 73 distributes four multiplexed video signals to the first to the fourth video program multiplexing units 75. The channel distributor 77 demultiplexes each multiplexed video signals into individual video signals. After error corrected, such individual video signals are time division multiplexed afresh by the channel multiplexer 79 into the multiplexed digital signal J. Inasmuch as the downlink digital signals are already MPEG2-TS multiplexed, it is possible if error correction function is put out of consideration to understand that the channel multiplexers 79 of the first to the fourth and furthermore to a sixteenth video program multiplexing units 75(16) collectively serve as the time division encoder 23 of Fig. 1 and as the packet sequence multiplexer 33 of Fig. 2.

In the STL 67, each downlink digital signal of the 12-GHz band is frequency converted and thereafter branched into first to fourth branched signals of a 1-GHz band by the digital video signal distributor 73 for delivery respectively to the first to the fourth video program multiplexers 75. Each channel multiplexer 79 produces the multiplexed digital signal J which has the bit rate of the STM-1 module, namely, of 155.52 Mbps and into which five transport stream signals are time division multiplexed. The program multiplexing units other than the first to the fourth ones 75(1) to 75(4), such as the sixteenth one 75(16) is for producing a similar multiplexed digital signal of the STM-1 module for other services. A bit multiplexer (MUX) 81 bit multiplexes sixteen such multiplexed digital signals and produces a high speed digital signal K of a higher bit rate of 2488.32 Mbps. Responsive to the high speed digital signal, an optical transmitter 35 supplies the trunk optical fiber 37(0) with the high speed digital optical signal described above and having a wavelength of 1551 nm.

Each ONU 69 comprises an optical receiver 41 connected to one of the branch optical fibers 37(b) for reproducing the high speed digital signal K. Demultiplexing this reproduced digital signal into first to fourth and fifth to sixteenth demultiplexed signals which are reproductions of the multiplexed digital signal J of the STM-1 module, namely, of the bit rate of 155.52 Mbps, an ONU demultiplexer 83 delivers the first to the fourth and other demultiplexed signals to a video program demultiplexing or video program selecting unit 85. Decoding transport packets of reproduced multiplexed digital signal in the manner which will presently be described, the video program demultiplexing unit 85 supplies a multiplexed digital video signal to the television monitor 49 like in Fig. 4.

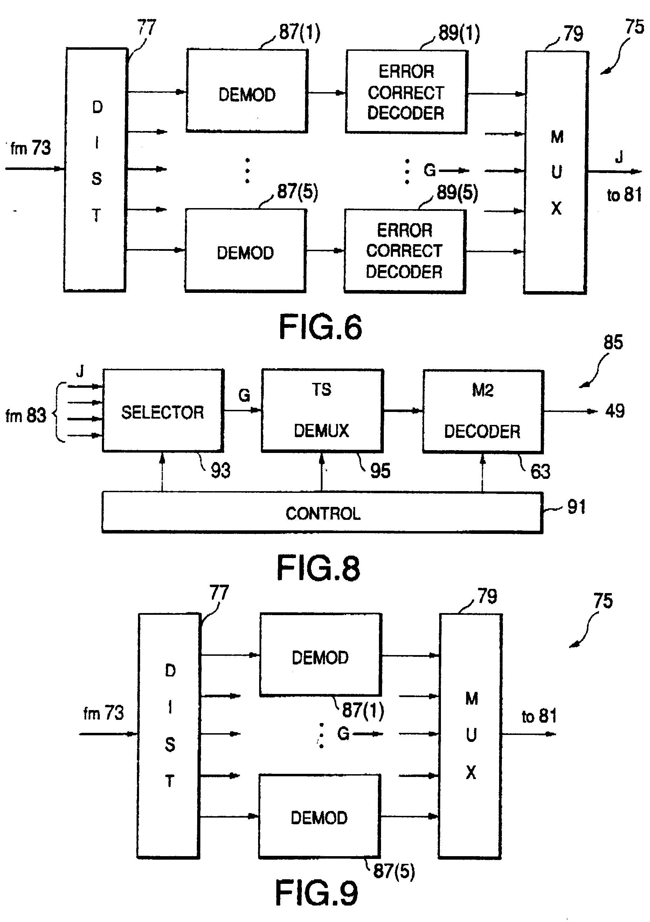

Turning to Fig. 6 with Fig. 5 continuously referred to, each video program multiplexing unit 75 will be described in greater detail. The video program multiplexing unit 75 corresponds to the digital signal multiplexing device 27 of Fig 2 and comprises the channel distributor 77 which is described in conjunction with Fig. 5 and demultiplexes the multiplexed video signal distributed thereto by the digital video signal distributor 73 into up to five broadcast schedules. Connected to the channel distributor 77, first to fifth demodulators 87(1) to 87(5) or 87 are assigned with respective carrier frequencies of the multiplexed broadcast programs and produce baseband signals of a common bit rate of 42.192 Mbps.

Connected respectively to the demodulators 87, first to fifth error correction decoders 89(1) to 89(5) or 89 are for decoding the inner and the outer correction codes to first to fifth error corrected signals which are in correspondence to the intermediate multiplexed signals G of Fig. 2, namely, the five transport stream signals described above. Connected to the first to the fifth error correction decoders 89, the channel multiplexer 79 produces the multiplexed digital signal J with the time division multiplexing carried out as follows.

Further turning to Fig. 7 with Fig. 6 continuously referred to, a frame format is for the multiplexed digital signal J used in the digital signal multiplexing and demultiplexing system of the principle illustrated with reference to Fig. 5. Each frame of the multiplexed digital signal is depicted in a top row at J and has a frame period of 125 microseconds and a frame length of 2,430 bytes consisting of a frame header (HEAD) of 155 bytes and a payload (PAY L) of 2,275 bytes. As depicted along a middle row, the frame header consists of four fields, namely, for a frame synchronization pattern A of 5 bytes, a stuff datum B of 15 bytes, a specific pattern C of 130 bytes, and stuff bits D of 5 bytes. The payload consists of first, second, ..., 454-th, and 455-th fields. In the manner depicted along a bottom row, the frame synchronization pattern A consists of first to third bytes and fourth and fifth bytes. Each of the first to the third bytes is used as the SDH STM-1 A1 byte. Each of the fourth and the fifth bytes is the SDH STM-1 A2 byte. In the payload, the transport streams of the first to the fifth broadcast programs, each five bytes long, are time multiplexed in each of the first to the 455-th fields as indicated by labels TS#1 to TS#5.

Turning back to Fig. 5, it should be noted that the transport stream signals G for the multiplexer 79 are not synchronous with a system clock of 2488.32 MHz. Stuff synchronization is therefore used in the digital signal multiplexing and demultiplexing system of this invention in the manner shown in Fig. 7. Incidentally, a transport stream clock frequency of 29.162 MHz is used in the transport stream signal G.

More particularly, a synchronized clock frequency of 29.184 MHz is used for the multiplexed digital signal. The synchronized clock frequency is a little higher than the transport clock frequency in order to apply the stuff synchronization and is in synchronism with the system clock. After production of the stuff datum B and the stuff bits D of Fig. 7, the transform stream signals are byte multiplexed. Thereafter the frame header is added to complete the multiplexed digital signal J.

Turning now to Fig. 8 and Fig. 5 again referred to, each video program demultiplexing unit 85 will be described in greater detail. In the video program demultiplexing unit 85, a control circuit 91 is programmed to produce first to third control signals for controlling selection of a selected multiplexed digital signal J from the first to the fourth demultiplexed signals produced by the ONU demultiplexer 83, selection of a selected transform stream signal G from the selected multiplexed digital signal, and decode of the selected transform stream signal into reproduced transform packets for selective supply of the reproduced transform packets to the television monitor 49, respectively. Connected to the ONU demultiplexer 83, a selector 93 is controlled by the first control signal to produce the selected multiplexed digital signal. Supplied with the selected multiplexed digital signal, a transform stream (TS) demultiplexer 95 is controlled by the second control signal to produce the selected transform stream signal. Connected to the transform stream demultiplexer 95 and to the television monitor 49, an M2 decoder 63 is similar to that described in connection with Fig. 4 and is controlled by the third control signal to selectively supply the reproduced transform packets to the television monitor 49. It should be noted in this connection that each error correction decoder 89 produces the transform stream signal G with multiplexing in the MPEG2-TS scheme, the channel multiplexer 79 produces the multiplexed digital signal J by the time division multiplexing, and the bit multiplexer 81 produces the high speed digital signal with the bit multiplexing.

In each video program demultiplexing unit 85, the second control signal is scheduled to control the transform stream demultiplexer 95 in accordance with a frame format of multiplexing the first to the fifth transport stream signals. When the frame format of Fig. 7 is used, the transform stream demultiplexer 95 selects the first transform stream signal at a first byte of the payload and thereafter with a five-byte period and, for example, the third transport stream signal at a third byte of the payload and then with the five-byte period. The transform stream demultiplexer 95 has a simpler structure than a similar circuit in which the frame header is searched every time on selecting the selected transform stream signal. In addition, the digital signal multiplexing and demultiplexing system of Fig. 5 is made possible to multiplex more than one hundred broadcast programs in a bit-rate band of about 600 Mbps and to select one alone of the broadcast programs.

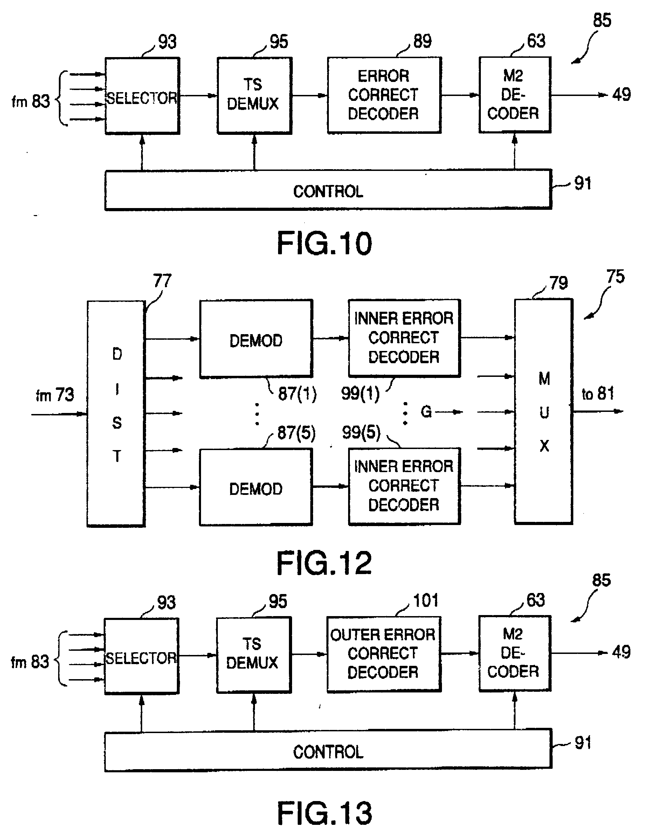

Referring afresh to Figs. 9 and 10 in addition to Fig. 5, a digital signal multiplexing device and a multiplexed digital demultiplexing device will respectively be described, which are for use in a modified digital signal multiplexing and demultiplexing system according to a modification of the system illustrated with reference to Fig. 5. Only the video program multiplexing and demultiplexing units 75 and 85 will be described for use in place of those described in conjunction with Figs. 6 and 8.

In Figs. 9 and 10, each error correction decoder 89 is used, rather than in the video program multiplexing unit 75, between the transform stream demultiplexer 95 and the M2 decoder 63. The high speed digital optical signal carries the high speed digital signal K and the inner and the outer error correction codes. In this example, it is possible to correct a code error which might be introduced while the digital optical signal is propagated through the optical fibers 37(0) and 37(b) and the optical splitter 71.

Turning to Fig. 11, a frame format is for the transform stream signal J used in the modified digital signal multiplexing and demultiplexing system. In the manner illustrated along a top row with a legend J, each frame is again 125 microseconds (2,430 bytes) long and identical with that described in connection with Fig. 7 except for the frame header of 453 bytes and the payload of 1,977 bytes. In a middle row, the frame header is a little different from that of Fig. 7. For the payload, only first to third transport packet streams are taken into account with the payload composed of first to 659-th fields. The frame header is composed of the frame synchronization pattern A of 6 bytes, a stuff datum B of 9 bytes, a specific pattern C of 435 bytes, and stuff bits D of 3 bytes. In a bottom row, the synchronization pattern A consists of three SDH STM-1 A1 bytes and three SDH STM-1 A2 bytes. In each of the first to the 659-th fields, the first to the third transport stream signals are byte multiplexed.

Referring to Figs. 12 and 13, a digital signal multiplexing device and a multiplexed digital signal demultiplexing device are for use in a different digital signal multiplexing and demultiplexing system according to another modification of the system described with reference to Fig. 5. Like in Figs. 9 and 10, only the video program multiplexing and demultiplexing units 75 and 85 will be described.

In the video program multiplexing unit 75, first to fifth inner error code decoders 99(1) to 99(5) or 99 are substituted for the first to the fifth error correction decoders 89 of Fig. 6. In the video program demultiplexing unit 85, an outer error code decoder 101 is substituted for the error correction decoder 89 of Fig. 10. It is possible with the different digital signal multiplexing and demultiplexing system to deal with the code error which might take place in the optical fibers 37(0) and 37(b) and the optical splitter 71.

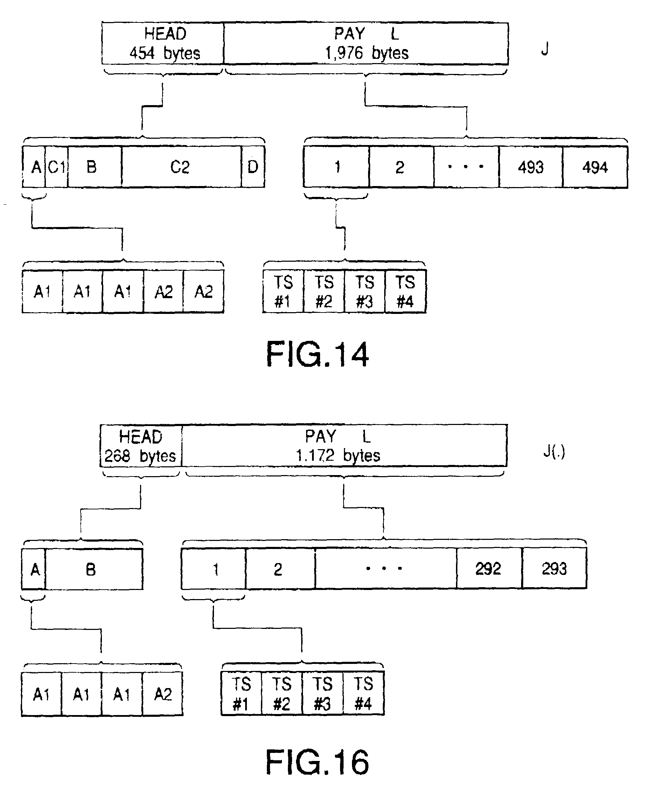

Turning to Fig. 14, a frame format is for the transform stream signal J used in the different digital signal multiplexing and demultiplexing system mentioned in connection with Figs. 12 and 13. Attention is directed to only the first to the fourth broadcast programs. Consequently, the fifth inner code decoder 99(5) is not used in the example being illustrated. As depicted along a top row with the legend J, each frame is 125 microseconds long and consists of 2,430 bytes like in Figs. 7 and 11. The frame header is 454 bytes long. The payload is 1,976 bytes long. Along a middle row, the frame header consists of a frame synchronization pattern A of 5 bytes, a first specific pattern C1 of 3 bytes, a stuff datum B of 12 bytes, a second specific pattern C2 of 430 bytes, and stuff bits D of 4 bytes. The payload consists of first to 494-th fields. Along a bottom row, the frame synchronization pattern A is composed of three SDH STM-1 A1 bytes and two SDH STM-1 A2 bytes. The transform stream signal of the first to the fourth broadcast programs are byte multiplexed in each of the first to the 494-th fields.

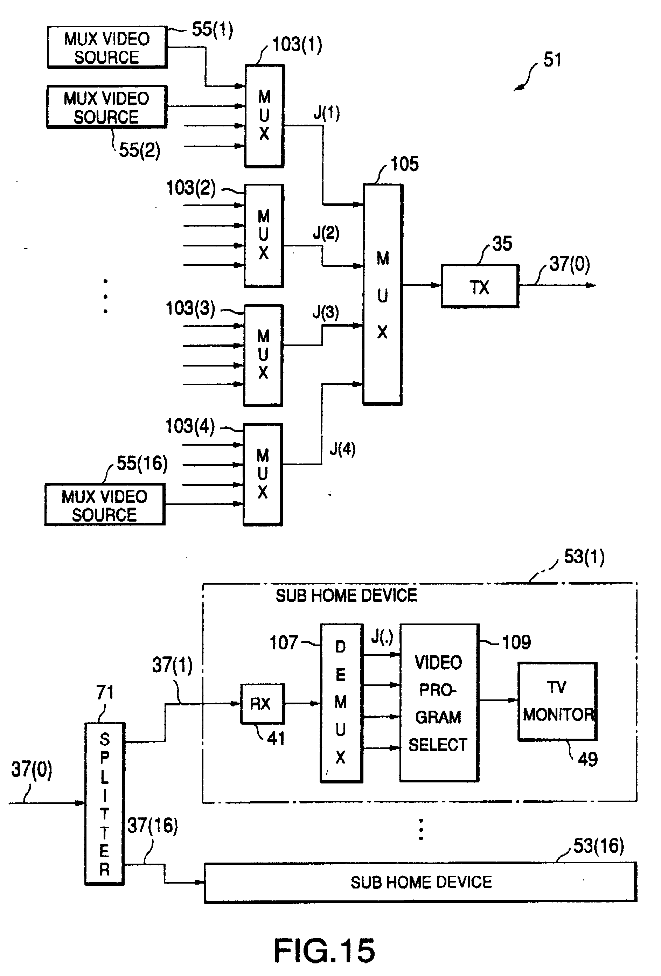

Referring now to Fig. 15, the description will proceed to a digital signal multiplexing and demultiplexing system according to a fourth preferred embodiment of this invention. Like the system illustrated with reference to Fig. 4, this wholly digital optical CATV (cable television) system comprises a video program distributing center (VIDEO DIST CENTER) and first to sixteenth subscriber home devices (SUB HOME DEVICE) which are similar to those described in conjunction with Fig. 4 and are therefore designated by the reference numerals 51 and 53(1) to 53(16) or 53. Like in Fig. 5, the video program distributing center 51 and the subscriber home devices 53 are connected by a trunk optical fiber 37(0), an optical splitter 71, and first to sixteenth branch optical fibers 37(1) to 37(16) or 37(b). In the video program distributing center 51, the first to the eighth multiplexed video sources 55 of Fig. 4 are changed to similar first and second to sixteenth multiplexed (MUX) video source 55(1), 55(2), ..., and 55(16) or 55 which are used in a coaxial cable CATV system described in the Noda et al paper referred to hereinabove.

More particularly, the multiplexed video source 55 are for a plurality of MPEG2-TS multiplexed video signals like those used in the downlink signal described in connection with Fig. 5. A common standard is applicable to a CATV and digital satellite broadcast. In the CATV, only the outer correction code of the abbreviated Reed-Solomon code is used because errors scarcely appear in coaxial cables in contrast to propagation of radio signals. The transmission rate of each carrier in this digital CATV system is therefore equal to 31.644 Mbps.

In the video program distributing device 51, the first to the sixteenth multiplexed video sources 55 are grouped into first to fourth source groups. Respectively connected to the first to the fourth source groups are first to fourth primary multiplexers 103(1) to 103(4) or 103, each for byte multiplexing four transport stream signals with addition of a frame header into a byte multiplexed signal of the SDH STM-1 bit rate of 155.52 Mbps. In this manner, the first to the fourth primary multiplexers 103 respectively produce first to fourth byte multiplexed signals J(1) to J(4) or J(.).

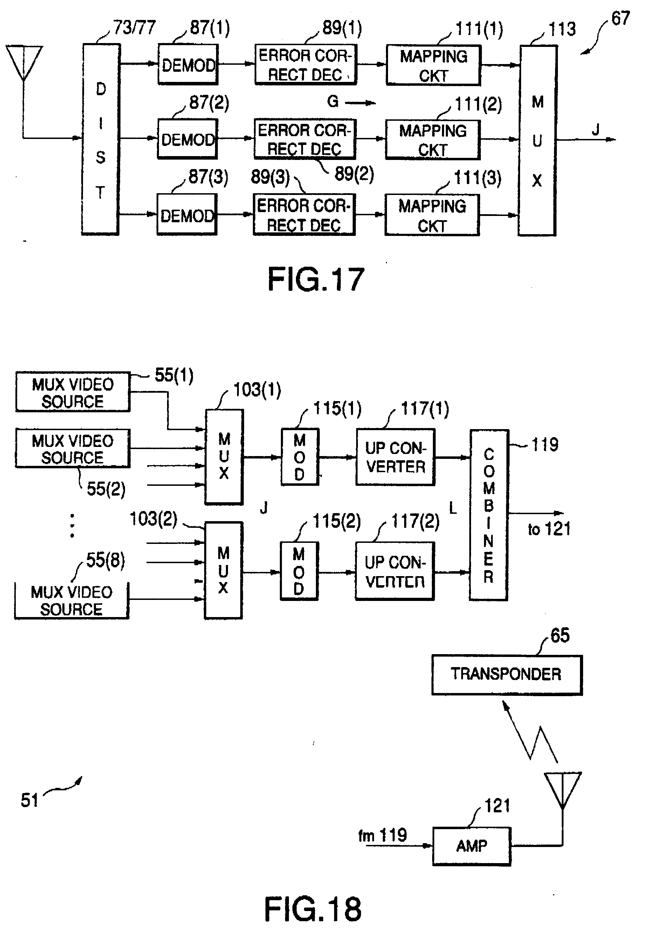

Turning to Fig. 16 during a short while, a frame format is given to each byte multiplexed signal J(.). No stuffing is used. In the manner depicted along a top row with a legend J(.), each frame again has the frame period of 74.074 microseconds and the 1,440-byte length. The frame header has a header length of 268 bytes. The payload has a payload length of 1,172 bytes. As shown along a middle row, the frame header consists of a frame synchronization pattern A of 4 bytes and a specific pattern B of 264 bytes. The payload consists of first to 293-rd fields, each four bytes long. As illustrated along a bottom row, the frame synchronization pattern consists of three SDH STM-1 A1 bytes and one DSH STM-1 A2 byte. In each of the first to the 293-rd fields, the first to the fourth transform signals are byte multiplexed.

Turning back to Fig. 15, the video program distributing device 51 further comprises a secondary multiplexer 105 which corresponds to the time division encoder 23 of Fig. 1 and is for bit multiplexing the first to the fourth byte multiplexed signals J(.) into a time division multiplexed signal of a higher bit rate of 622.08 Mbps. Responsive to this higher bit rate signal, an optical transmitter 35 supplies the trunk optical fiber 37(0) with a digital optical signal.

In each of the first to the sixteenth subscriber home devices 53, an optical receiver 41 is connected to a pertinent one of the branch optical fibers 37(b) and reproduces the higher bit rate signal. Connected to the optical receiver 41, a demultiplexer 107 demultiplexes the reproduced higher bit rate signal into first to fourth reproductions of the byte multiplexed signals J(.) of a common bit rate of the SDH STM-1 bit rate. Connected to the demultiplexer 107, a video program selecting unit (VIDEO SELECT) 109 is identical in structure with the video program demultiplexing unit 85 of Fig. 13 and supplies the television monitor 49 with a selected one of the multiplexed video signals.

Referring to Fig 17, the description will proceed to a station line terminal device (SLT) 67 of a digital signal multiplexing and demultiplexing system according to a fifth preferred embodiment of this invention. In the manner described with reference to Fig. 5, the SLT 67 serves as the digital signal multiplexing device 27 of Fig. 2 and is operable to receive by a symbolically depicted reception antenna the downlink digital signals from the transponders 65 on board the JCSAT-3 communication satellite (not shown). Into each downlink signal, SDH multiplexed are a plurality of transform stream signals, such as first to third transform stream signals. Responsive to a received downlink digital signal, a digital video signal and channel distributor (DIST) 73/77 produces first to third transform stream reproductions. Connected to the distributor 73/77 are first to third demodulators 87(1) to 87(3) or 87 and first to third error correction decoders 89(1) to 89(3) or 89. A succession of the demodulator 87 and the decoder 89 processes each transform stream reproduction into an error corrected transform stream signal G of a bit rate of about 29.2 Mbps.

In the SLT 67, first to third mapping circuits 111(1) to 111(3) or 111 are used, each for accommodating the error corrected transform stream signal in a virtual container (VC) of the SDH to produce a VC-3 signal of a 48.960-Mbps bit rate. Produced by the first to the third mapping circuits 111, first to third VC-3 signals are converted by a VC multiplexer 113 into a multiplexed video signal J of the SDH STM-1 bit rate of 155.52 Mbps for delivery after again multiplexed by the bit multiplexer 81 of Fig. 5, to a plurality or ONU's, such as 69 of Figs. 5, 8, 10, and 13. It has been possible to make an STM-1 signal consist of three channels of the downlink signal of three transponders, such as 65 when the three channels are mapped in the SDH STM-1 module.

Referring to Fig. 18, attention is directed to a video signal distributing center 51 for use in a digital signal multiplexing and demultiplexing system according to a sixth preferred embodiment of this invention. The video signal distributing center 51 is similar to that described in connection with Fig. 4 except for distributing a multiplexed sequence of a plurality of ATM cell sequences K to a plurality of ONU's 85 of Fig. 5 through the transponders 65 on a millimeter radio carrier rather than through the trunk optical fiber 37(0), the optical splitter 71, and the branch optical fibers 37(b). Like in Fig. 4, the video signal distributing center 51 comprises first to eighth multiplexed video sources 55(1) to 55(8) or 55 which are for producing MPEG2-TS multiplexed transport stream signals similar to those described in conjunction with Fig. 15 and are grouped into first and second source groups. Responsive to the multiplexed transform stream signals of the first and the second source groups, first and second multiplexers 103(1) and 103(2) or 103 respectively produce first and second multiplexed digital signals J, each with the frame format of Fig. 16.

Connected to the first and the second multiplexers 103, first and second modulators (MOD) 115(1) and 115(2) or 115 are for subjecting the first and the second multiplexed signals to FSK (frequency shift keying) modulation. Produced by the modulators 115, first and second FSK'ed signals are up converted by first and second up converters 117(1) and 117(2) or 117 into first and second millimeter wavelength signals L of 58 GHz and 62 GHz, respectively. After combined by a combiner 119 and power amplified by an amplifier (AMP) 121, a frequency combined signal of the first and the second FSK'ed signals is transmitted by a transmission antenna to the transponders 65.

Referring to Fig. 19, the description will finally proceed to a video signal distributing device 51 for use in a digital signal multiplexing and demultiplexing system according to a seventh preferred embodiment of this invention. Like in Figs. 4, 15, and 18, first to eighth multiplexed video sources 55(1) to 55(8) or 55 are grouped into first and second source groups. Connected to these groups are first and second multiplexers 103(1) and 103(2) or 103 for producing first and second multiplexed digital signals J as described in conjunction with Fig. 18. Connected to the first and the second multiplexers 103, first and second optical transmitters 123(1) and 123(2) or 123 respectively produce first and second optical signals of a wavelength of 1550 nm and another wavelength of 1554 nm. These optical signals are combined by an optical coupler 125 into a wavelength multiplexed signal, which is delivered to the trunk optical fiber 37(0) for further delivery to a plurality of ONU's 85 which are similar to those described in conjunction with Fig. 5. It is possible in this manner to multiplex a great number of digital video signals by wavelength multiplexing.

While this invention has thus far been described in specific conjunction with an appreciable number of preferred embodiments thereof, it should be understood that the number or the devices, units, or circuits can optionally be changed in compliance with scales of the digital signal multiplexing and demultiplexing systems. The transmitters and the optical transmitters, such as 35, and the receivers and the optical receivers, such as 41, may be a combined transmitter and receiver and a combined optical transmitter receiver. In a like manner, various components of each system may either be divided into simpler components or integrated into an integrated component according to their function or functions.

It is possible with this invention to multiplex and demultiplex the digital MPEG2 video signals of scores of video channels with these video signals kept as digital signals as they are. This is because a plurality of transport stream signals multiplexed in the MPEG2-TS scheme are further multiplexed into the multiplexed digital signal in the time division scheme from which the MPEG2-TS scheme is excluded.

Recapitulating, it is possible with this invention to time division multiplex, with rewriting neither contents of transport packets nor PID's, a plurality of streams which are individually MPEG2-TS multiplexed. Time division multiplexing of the transport stream signals of a communication satellite digital broadcast service is very useful in implementing a wholly digital broadcast service which is quite compatible with the communication satellite digital broadcast service. Use of the identifiers in a packet header for discrimination between the transport stream signals makes it possible to flexibly accommodate a plurality of packets of different packet lengths and of different information transmitting rates, to suitably select the number of the MPEG2-TS streams, and to use a multiplexed digital signal demultiplexing device available on the market. Use of similar identifiers in respective positions of the payloads for discrimination between the transport stream signals makes it possible to simplify the structure of circuitry on distinguishing, for demultiplication, one of the transport stream signals from another with a higher compatibility with the synchronous digital hierarchy. In addition, use of a plurality of steps in time division multiplexing other than the MPEG2-TS scheme enables a highly multiplexed digital signal and simplifies control and maintenance of the system. When different frame formats are used in the plurality of steps, it becomes possible to construct a multimedia communication and broadcast network for the broadcast service and other services. Finally, use of the frequency division, the wavelength division, the space division, and the code division multiplexing enables it unnecessary to establish synchronization between the signals to be multiplexed and to unify the bit rates or the frame formats before the multiplexing.

## Claims

1. A digital signal multiplexing device for multiplexing into a multiplexed digital signal a first plurality of digital video signals compression encoded in accordance with an MPEG2 scheme, characterised by:
first multiplexing means (21) for multiplexing said digital video signals in accordance with an MPEG2 transport stream scheme into a second plurality of transport stream signals; and
second multiplexing means (23) for multiplexing said transform stream signals into said multiplexed digital signal in accordance with a time division multiplexing scheme from which said MPEG2 transport stream scheme is excluded.

2. A digital signal multiplexing device as claimed in claim 1, characterised in that said first multiplexing means (21) comprises a plurality of input encoders (29), equal in number to said first plurality, supplied respectively with input video signals from video sources (25) to compression encode said input video signals into said digital video signals in accordance with said MPEG2 scheme.

3. A digital signal multiplexing device as claimed in claim 1 or 2, characterised in that said first multiplexing means (21) comprises:
a demodulator (87) for demodulating into a baseband signal a downlink signal received from a satellite transponder (65); and
a transmission decoder (89, 99) for decoding an error correction code included in said baseband signal to produce an error corrected signal with an error corrected in said baseband signal in compliance with said error correction code as one of said digital video signals.

4. A digital signal multiplexing device as claimed in claim 1, 2, or 3, characterised in that:
said first multiplexing means (21) comprises:
at least two encoders (29), each for compression encoding one of said digital video signals into an encoded sequence in accordance with said MPEG2 scheme so as to make said encoders respectively produce a plurality of encoded sequences; and
at least two packet forming units (31) for respectively converting said encoded sequences to packet sequences, equal in number to said first plurality, each packet sequence being a sequence of packets and including a packet header indicative of a packet stream identifier for use in distinguishing said each packet sequence from another sequence of packets;
said second multiplexing means (23) being a packet multiplexer (33) for multiplexing the packet sequences into said transport stream signals in accordance with said time division multiplexing scheme.

5. A digital signal multiplexing device as claimed in claim 4, characterised in that said packet forming units (57) are for producing said packet sequences as asynchronous transfer mode sequences, said packet multiplexers (29) being for multiplexing said asynchronous transfer mode cell sequences into said transfer stream signals.

6. A digital signal multiplexing device as claimed in any one of claims 1 to 5, characterised in that said second multiplexing means (23) is for multiplexing said transport stream signals into a sequence of frames having a predetermined frame period, used as said multiplexed digital signal, and composed of successions, each comprising a frame header including a frame synchronization pattern and a frame payload in which said transport stream signals are time division multiplexed.

7. A digital signal multiplexing device as claimed in claim 6, characterised in that each frame is a synchronous transport module frame of synchronous digital hierarchy and of a bit rate of 155.52 Mbps.

8. A digital signal multiplexing device as claimed in claim 7, characterised in that said frame period is 125 microseconds long, said frame synchronization pattern comprising first to third, fourth, and fifth bytes, each of said first to said third bytes being an A1 byte of said synchronous transport module frame, each of said fourth and said fifth bytes being an A2 byte of said transport synchronous module frame.

9. A digital signal multiplexing device as claimed in any one of claims 1 to 8, said multiplexed digital signal being a final multiplexed signal, characterised in that said second multiplexing means (23) comprises:
primary multiplexing means (103) for byte multiplexing said transport stream signals into a third plurality of intermediate multiplexed signals; and
secondary multiplexing means (105) for time division multiplexing said intermediate multiplexed signals into said final multiplexed signal.

10. A digital signal multiplexing device as claimed in claim 9, characterised in that:
said primary multiplexing means (103) comprises:
a first primary multiplexer (103(1)) for byte multiplexing said transport stream signals into a third primary plurality of primary intermediate multiplexed signals of a frame format; and
a second primary multiplexer (103(3)) for byte multiplexing said transport stream signals into a third secondary plurality of secondary multiplexed signals of a different frame format;
said secondary multiplexing means (105) being for time division multiplexing said primary and said secondary intermediate multiplexed signals into said final multiplexed signal.

11. A digital signal multiplexing device as claimed in claim 9, characterised in that:
said primary multiplexing means (103) comprises
a first primary multiplexer (103(1)) for byte multiplexing said transport stream signals into a third primary plurality of primary intermediate multiplexed signals of a frame format; and
a second primary multiplexer (103(3)) for byte multiplexing said transport stream signals into a third secondary plurality of secondary intermediate multiplexed signals of a different format;
said secondary multiplexing means (105) being for multiplexing said primary and said secondary intermediate multiplexed signals into said final multiplexed signal in accordance with any one of a frequency, a wavelength, a space, and a code division multiplexing.

12. A digital signal multiplexing device as claimed in any one of claims 1 to 11, characterised in that said second multiplexing means (23) is for multiplexing said transport stream signals into said multiplexed digital signal in accordance with any one of a frequency, a wavelength, a space, and a code division multiplexing.

13. A multiplexed digital signal demultiplexing device for demultiplexing a multiplexed digital signal produced by compression encoding a first plurality of digital video signals in accordance with an MPEG2 scheme respectively into encoded sequences, converting said encoded sequences respectively to packet sequences, each packet sequence being a sequences of packets and including a packet header indicative of a packet stream identifier for use in distinguishing said each sequence of packets from another sequence of packets, multiplexing said packet sequences into a second plurality of transport stream signals in accordance with an MPEG2 transport stream scheme, and time division multiplexing said transport stream signals into said multiplexed digital signal, characterised by:
time division demultiplexing means (43) for demultiplexing said multiplexed digital signal into said second plurality of reproductions of said transport stream signals with reference to the packet stream identifier included in each reproduction; and
MPEG2 demultiplexing means (45) for demultiplexing said reproductions of transform stream signals in accordance with said MPEG2 transport stream scheme into said first plurality of reproductions of said digital video signals.

14. A multiplexed digital signal demultiplexing device as claimed in claim 13, said multiplexed digital signal being produced with said time division multiplexing carried out by multiplexing said transport stream signals into a sequence of frames having a predetermined frame period, used as said multiplexed digital signal, and composed of successions, each comprising a frame header including a frame synchronization pattern and a frame payload into which said transport stream signals are time division multiplexed together with a program map table indicative of individual digital video signals comprised by each transport stream signal, characterised in that:
said time division demultiplexing means (43, 83) is for picking up one reproduction of a selected transport stream signal from said reproductions of transport stream signals with reference to the packet stream identifier indicative of said selected transport stream;
said MPEG2 demultiplexing means (45, 95, 107) being for picking up from said reproductions of digital video signals a reproductions of a desired digital video signal with reference to the program map table in which said desired digital video signal is indicated as one of said individual digital video signals.
